# EUROPEAN PATENT APPLICATION

(11) **EP 4 621 515 A1**
(43) Date of publication of application: **24.09.2025**
(21) Application number: 24165175.1
(22) Date of filing: 21.03.2024
(51) Int. Cl.: G05D 1/223, G05D 1/698

(54) **METHOD AND DEVICE FOR REMOTE CONTROL OF A VESSEL**

(71) Applicant: ABB SCHWEIZ AG, 5400 Baden (CH)
(72) Inventor: MATILAINEN, Antti, 00980 Helsinki (FI); TERVO, Kalevi, 00980 Helsinki (FI); ESKOLA, Reetta, 01700 Vantaa (FI); LAITASALMI, Heikki, 00980 Helsinki (FI)
(74) Representative: Kransell & Wennborg KB

(57) **Abstract**

A computer-implemented method for remote control of a vessel from a remote operation center comprising control input devices, the method comprising: connecting (S202) the remote operation center to a device of the vessel, the device having access to a data transformation translation between a vessel operation configuration and control input commands of the remote operation center, configuring (S203) the control input devices of the remote operation center according to the vessel operation configuration of the vessel, (S206) transmitting a command from the remote operation center to the device of the vessel, the command being transformable by the device using the data transformation translation, to a steering and/or maneuvering command for the vessel.

## Description

### Field of the Invention

The present invention generally relates to a computer-implemented method for remote control of a vessel, to a device installable in a vessel for remote control of the vessel, to a marine vessel comprising the device, to a computer program product, and to a remote operation center configured for remote control of a vessel.

### Background

The marine industry has user experience solutions that are vessel unique, and which leads to that vessel operator environments are not designed as integrated systems. This may lead to increased risk of human errors and technical failures since installation of operator environments is different from site to site. Even changing crew from one ship to another, pose a significant risk as seemingly similar user interfaces may have significantly different functionalities.

Moreover, as the systems are not standardized, installation and integration are very time consuming, and it accumulates to significant excess cost for all stakeholders in the value chain without providing any added value.

Accordingly, there is room for improvement of vessel operation environments.

### Summary

In view of the above-mentioned and other drawbacks of the prior art, it is an object of the present invention to provide a method and a device for remote control of a vessel that at least partly alleviates the drawbacks of prior art.

According to a first aspect of the invention, there is provided computer implemented method for remote control of a vessel from a remote operation center comprising control input devices, the method comprising: connecting the remote operation center to a device of the vessel, the device having access to a data transformation translation between a vessel operation configuration and control input commands of the remote operation center, configuring the control input devices of the remote operation center according to the vessel operation configuration of the vessel, and transmitting a command from the remote operation center to the device of the vessel, the command being transformable by the device using the data transformation translation, to a steering and/or maneuvering command for the vessel.

The present invention is at least partly based on the realization to, for each vessel having unique vessel operation configuration, generate a transformation of the operation and steering and/or maneuvering commands of the vessel to a standardized remote operation center having its own control input devices and input commands. With the data transformation translation, the vessel can be controlled from the remote operation center using standard control input devices familiar to an operator. Especially, the remote operation center can be the same for more than one vessel, which allows for the operator to easily switch between controlling another vessel using the same standard control input devices used for the first vessel. Especially, the remote operation center is reconfigured based on the vessel is connects to.

A steering and/or maneuvering command result in change of the vessel state including e.g., speed, heading, position, etc. by adjusting the state of the thruster states, where a thruster may be for example propulsors, rudders, or any other force generating devices.

Configuring the control input devices according to the vessel operation configuration may be performed by manual selection between different configuration e.g., via a scroll down menu, or it may be read from a file received from the vessel, or read from a database of different vessel operation configuration matched with vessel IDs. Moreover, the vessel configuration may be obtained via digital data interface (API or similar) directly from vessel or from a cloud interface.

Control device configuration is that a specific control device controls a specific steering or propulsion device or system of the vessel, or that displays for the remote operation centers shows specific data (sensor data, camera views, etc) from the vessel. For example, a control lever of the remote center may be reconfigured to control rudders and propellers, tunnel thrusters, azimuthal thrusters, waterjets, or any other thruster types of different types of vessels.

If a command is received by the vessel, from the remote operator center, the data transformation translation is used for transforming the received command to a local command readable by the control system of the vessel. In a similar way, if a command or monitoring signal is send from the control system of the vessel, it is transformed using the data transformation translation, and subsequently transmitted to the remote operator center which can read the transformed data or signal.

In at least one embodiment, the data transformation translation may be specific to the vessel. That is, one data transformation translation is generated for each ship, thereby improving the standardization of the remote operating center by allowing expansion to a fleet of vessels.

In a possible implementation a data file that describes the vessel operation configuration may be used. Such a data file is a computerized description of the commands used for controlling and monitoring the vessel operation. The commands in the data file are unique to vessel and cannot be directly compiled into the remote operation center, instead, the inventors realized to generate a data transformation translation that transforms the commands in the data file to a format readable by the remote operation center. The data transformation translation may be stored in a digital memory of the vessel.

In embodiments, the vessel may be a first vessel, the method comprising: connecting the remote operation center to a second vessel, and reconfiguring the control input devices of the remote operation center according to the vessel operation configuration of the second vessel. In other words, the remote control center is reconfigured according to the vessel is connects to.

In at least one embodiment, the remote operation center may be external to the vessel, onshore, onboard the controlled vessel, or onboard another vessel. That is, the remote operation center may also be installed in the vessel it controls.

According to a second aspect of the invention, there is provided a remote operation center configured for remote control of a vessel, the remote operation center comprising: at least one display and at least one input control device, a control unit configured to: connect the remote operation center to a device of the vessel, the device having access to a data transformation translation between a vessel operation configuration and control input commands of the remote operation center, configure the at least one display and the at least one input control device according to the vessel type; transmit a command produced by the at least one input control device of the remote operation center to the device of the vessel, the command being transformable by the device using the data transformation translation, to a steering and/or maneuvering command for the vessel.

The remote operation center may preferably be configured to connect to and control more than one vessel. In other words, the remote operation center may be programmable to configure its control devices and displays according to the vessel it is connected to, via the device or connectivity node installed in the vessel.

In embodiments, the remote operation center comprises a multiuse lever comprising multiple degrees of freedom, where each degree of freedom is programmable to control different steering and/or maneuvering aspects of a vessel. we can also limit the movement range of those degrees of freedom to correspond to the physical limitations of the specific devices. For example, a first degree of freedom may be the direction of the vessel, the first degree of freedom may be configure to allow 360 deg range in case of azimuth thrusters and for example -30...30 deg in case of rudder, and lock it to one direction, such as 90 degree in case of bow thruster. Similarly, the magnitude axis, e.g., a second degree of freedom may be limited to only positive values in cases the specific vessel cannot produce negative RPM for example which is the case in certain type of thrusters.

Further effects and features of the second aspect of the invention are largely analogous to those described above in connection with the first aspect of the invention.

According to a third aspect of the invention, there is provided a computer-implemented method for remote control of a vessel, the method comprising: generating a data transformation translation between a vessel operation configuration including a description of steering and/or maneuvering commands for the vessel and control input commands of a remote operation center comprising control input devices, receiving a command from the remote operation center, transforming the command using the data transformation translation to a steering and/or maneuvering command for the vessel, and transmitting the steering and/or maneuvering command to a control system of the vessel.

The vessel operation configuration may be received as a data file described above.

In at least one embodiment, the method may comprise establishing a predefined communication link with the remote operation center, and a vessel-specific communication link to the control system of the vessel. In order words, the communication link from the vessel to the remote operation center is the same for all vessels whereas the link to the control system of the vessel depends on the communication system of the vessel. Thus, a standardized interface implementable to many vessels is achieved.

In at least one embodiment, the method may comprise storing the data transformation translation on a digital memory local to the vessel.

In other embodiments, the data translation configuration may be provided via the remote operation center as well as from a cloud database / API.

Remote control may be from one of onshore (or generally anywhere outside the controlled vessel), onboard a vessel (either the controlled vessel or any other vessel).

Further effects and features of the third aspect of the invention are largely analogous to those described above in connection with the first aspect and the second aspect of the invention.

According to a fourth aspect of the invention, there is provided a device installable in a vessel for remote control of the vessel, the device is configured to: generate a data transformation translation between the vessel operation configuration including a description of steering and/or maneuvering commands for the vessel and control input commands of a remote operation center comprising control input devices, receive a command from the remote operation center, transform the command using the data transformation translation to a steering and/or maneuvering command for the vessel, and transmit the steering and/or maneuvering command to a control system of the vessel.

The device may be configured to receive a data file describing the vessel operation configuration including a description of steering and/or maneuvering commands for the vessel.

The device may be considered a connectivity node that is installed in the vessel to be controlled by the remote operation center. The device enables the remote operation center to control the vessel and preferably stores the data transformation translation on a digital memory.

In at least one embodiment, the device may be configured as a communication link between the remote operation center and the control system of the vessel, the device being tailored for the specific vessel by the data transformation translation.

In at least one embodiment, the device may be configured as an add-on to a vessel with an existing control system. In other words, the device may advantageously be integrated in already operative vessel. The device may be retrofitted into a vessel and setup for communication and use for operating the vessel from the remote operation center.

In at least one embodiment, the device may be configured to: establish a predefined communication link with the remote operation center, and a vessel-specific communication link to the control system of the vessel.

There is further provided a vessel comprising the device of the fourth aspect.

Further effects and features of the fourth aspect of the invention are largely analogous to those described above in connection with the first aspect, the second aspect, and the third second aspect of the invention.

According to a fifth aspect of the invention, there is provided a computer program product comprising program code for remote control of a vessel from a remote operation center comprising control input devices, the computer program product comprising: code for connecting the remote operation center to a device of the vessel, the device having access to a data transformation translation between a vessel operation configuration and control input commands of the remote operation center, code for configuring the control input devices of the remote operation center according to the vessel operation configuration of the vessel, code for transmitting a command from the remote operation center to the device of the vessel, the command being transformable by the device using the data transformation translation, to a steering and/or maneuvering command for the vessel.

Further effects and features of the fourth aspect of the invention are largely analogous to those described above in connection with the first aspect, the second aspect, the third second aspect, and the fourth aspect of the invention.

According to a sixth aspect of the invention, there is provided a computer program product comprising program code for remote control of a vessel, the program code comprising: code for generating a data transformation translation between the vessel operation configuration including a description of steering and/or maneuvering commands for the vessel and control input commands of a remote operation center comprising control input devices, code for reading a command from the remote operation center, code for transforming the command using the data transformation translation to a steering and/or maneuvering command for the vessel, and code for transmitting the steering and/or maneuvering command to a control system of the vessel.

There may further be included code for reading a data input describing the vessel operation configuration.

Further features of, and advantages with, the present invention will become apparent when studying the appended claims and the following description. The skilled person realize that different features of the present invention may be combined to create embodiments other than those described in the following, without departing from the scope of the present invention.

### Brief Description of the Drawings

These and other aspects of the present invention will now be described in more detail, with reference to the appended drawings showing an example embodiment of the invention, wherein:
Fig. 1 schematically illustrates a vessel and a remote operating system according to an embodiment of the invention; and
Fig. 2 is a flow-chart of method steps according to embodiments of the present invention;
Fig. 3 schematically illustrates a remote operation center configured for remote control of a vessel, or more than one vessel, according to embodiments of the present invention;
Fig. 4 is a flow-chart of method steps according to embodiments of the present invention;
Fig. 5 is a schematic view of a system of a remote operation center connected to a connectivity node of a vessel, and
Fig. 6 illustrates an input device in the form of a multifunctional lever according to embodiments of the invention.

### Detailed Description of Example Embodiments

In the present detailed description, various embodiments of the present invention are herein described with reference to specific implementations. In describing embodiments, specific terminology is employed for the sake of clarity. However, the invention is not intended to be limited to the specific terminology so selected. While specific exemplary embodiments are discussed, it should be understood that this is done for illustration purposes only. A person skilled in the relevant art will recognize that other components and configurations can be used without parting from the scope of the invention.

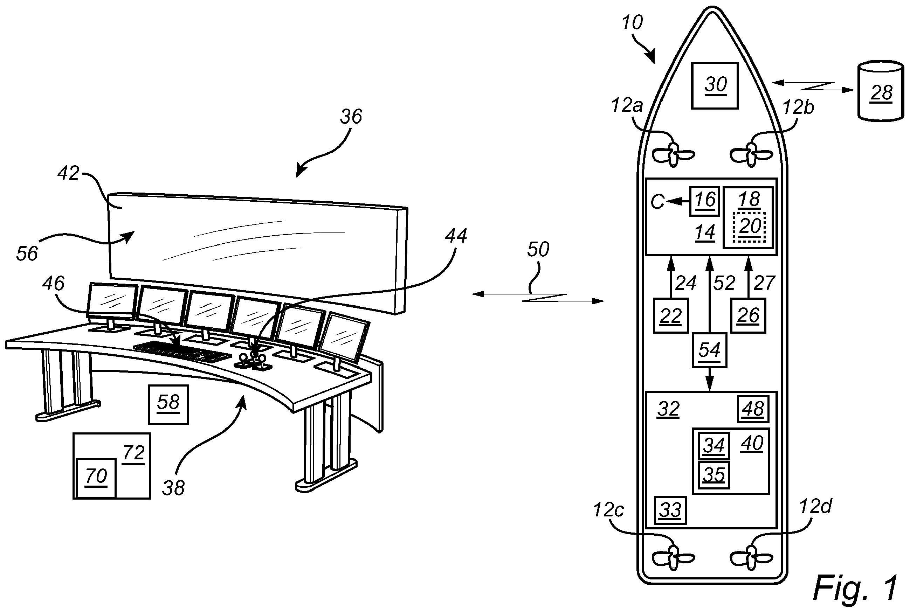

Fig. 1 schematically represents a top view of a marine vessel 10. The marine vessel 10 may for example be a ship, a boat, a barge, or a floating production storage and offloading (FPSO) unit. The vessel 10 comprises a plurality of thrusters, here a first thruster 12a, a second thruster 12b, a third thruster 12c and a fourth thruster 12d. One, several or all of the thrusters 12a-12d may also be referred to with reference numeral "12".

Each thruster 12 could be rotatable in a horizontal plane (parallel with the drawing plane of Fig. 1) into different thrust directions or be mounted in a fixed direction. Each thruster 12 may comprise a propeller and an engine driving the propeller. By increasing an engine speed of the engine, the thrust force of the thruster 12 can be increased, and vice versa. The thrusters 12 are here exemplified as azimuthing thrusters.

It is also envisaged that the vessel includes trochoidal, cycloidal, waterjet, etc. types of propulsion units. In case of fixed shaft line and rudder two different devices are typically included, the propeller and the rudder.

The vessel 10 further comprises a control system 14. The control system 14 of this example comprises a control unit 16 and a memory 18. The memory 18 may have a computer program stored thereon for controlling the vessel.

As shown in Fig. 1, a data file 20 describing the vessel operation configuration including a description of steering and/or maneuvering commands for the vessel 10 may be stored in the memory 18 or in a remote server 28 accessible using a wireless transmission device 30. Furthermore, a data transformation translation described in more detail below may also be stored in the memory 18 or in the remote server 28.

The vessel 10 of this example further comprises one or more sensors, here exemplified as a position sensor 22. The position sensor 22 is arranged to provide position data 24 to the control system 14. The position data 24 is indicative of a position of the vessel 10 in the horizontal plane. The position sensor 22 may for example be a GPS device further providing position data 24 to the control system 14. In this example, the control system 14 is configured to estimate a state variable of the vessel 10 based on the position data 24. The vessel 10 may use a wide range of sensors alternative to, or in addition to, the position sensor 22 to provide sensor data based on which the control system 14 can estimate the state variables of the vessel 10.

For example, the marine vessel 10 may comprise sensors for measuring environmental conditions such as wind speed and direction, local sea current conditions, or wave characteristics. Environmental data 27 indicating the environmental conditions is provided to the control system 14 from environment sensors 26 on-board the marine vessel, or from remote sensors such as weather stations via the wireless transmission device 30.

The vessel 10 comprises a device 32 that is configured to receive the data file 20 describing the vessel operation configuration including a description of steering and/or maneuvering commands for the vessel 10. In other implementations, the device 32 is pre-programmed according to the vessel operation configuration, or manually programmed on the vessel. The device 32 may be an add-on device that can be retrofitted into a vessel with a pre-existing control system 14. The device 32 preferably comprises a control unit 33.

The data file may include thruster characteristic data such as what types of thrusters the vessel has, the location of where they are installed, the maximum capacity and characteristics of those, what are the control variables of each thruster (rpm, angle, pitch, force, torque, power, etc.), what are the state variables of each thruster (actual rpm, angle, pitch,...) as well as variables defining whether the thruster is operational or not, variables defining alarms / exceptions, etc.

Using a data transformation translation, the remote operation center can interpret the thruster characteristic data those and reconfigure according to those data.

The device 32 is configured to generate a data transformation translation 34 between the vessel operation configuration and control input commands of a remote operation 36 center comprising control input devices 38. The data transformation translation 34 is stored as a data file 34 on a digital memory 40 of the device 32. Furthermore, the data transformation translation is specific to the vessel 10 since it is based on the specific vessel configuration.

In examples, the data he data transformation translation is engineered and hardcoded onboard a vessel computer.

The memory 40 may have a computer program 41 stored thereon. The computer program comprises program code which, when executed by the control unit 16, causes the data processing device 16 to perform, or command performance of, various steps described herein.

The remote operation center 36 comprises at least one display 42 and at least one input control device such as a joystick 44 and a keyboard 46. The remote operation center 36 may located be either offshore such as on a vessel, or onshore on for example a bridge.

The device 32 is in communication with the remote operation center 36 either via the wireless transmission device 30 or using a transmission device 48 comprised in the device 32.

The device 32 is configured as a communication link between the remote operation center 36 and the control system 14 of the vessel 10. Further, the device being tailored for the specific vessel by the data transformation translation 34 that is unique to the vessel according to its specific vessel configuration including the steering and/or maneuvering commands thereof.

The device 32 may be considered a connectivity node between the remote operation center 36 and the control system 14 of the vessel 10.

In operation, the device 32 receives a command from the remote operation center 36. The device 32 transforms the command using the data transformation translation 34 to a steering and/or maneuvering command for the vessel 10. Next, the device 32 transmits the steering and/or maneuvering command to the control system 14 of the vessel.

The vessel has its own preexisting onboard communication system, either hardwired or wireless. Further, the remote operation center 36 and the device 32 are pre-configured to communicate with each other. Therefore, the device 32 is configured to establish a predefined communication link 50 with the remote operation center 36, and a vessel-specific communication link 52 to the control system 14 of the vessel 10.

The predefined communication link 50 may be selected from a vast number of technologies such as 3gpp based technology such as 4G, 5G and their successors; satellite-based technologies (regardless whether geostationary-based, LEO, etc.); point-to-point radio communication based; mesh-radio, etc. Further possible technologies for the link include radiocommunication using either satellites, mesh (radios installed to other vessels, on land, etc.), or direct radio communication. In one possible embodiment the link 50 is an IP-based network where each vessel has a unique IP and each of the remote control centers has a unique IP. The communication is preferably be secured and encrypted and involve authentication to ensure cyber security. In addition, when onboard the same vessel, communication can additionally be through any physical network-based solution, such as Ethernet.

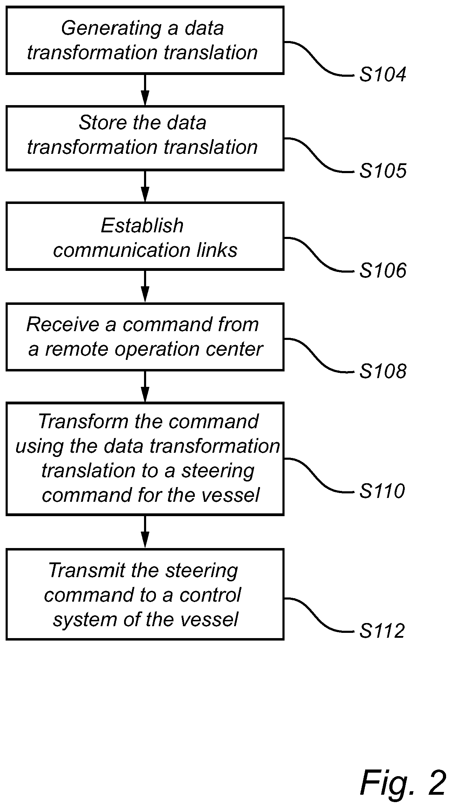

Fig. 2 is a flow-chart of method steps according to embodiments of the present invention.

In step S104, generating, by the control unit 33, a data transformation translation 34 between the vessel operation configuration including a description of steering and/or maneuvering commands for the vessel and control input commands of a remote operation center 36 comprising control input devices 46, 48.

The vessel operation configuration may be read from the data file 54 which may be received from the control system 14 of the vessel 10, or from the remote server 28, or it may the loaded to the device 32 memory 40 manually by an operator.

The control unit 33 may store, in step S105, the data transformation translation 34 on a digital memory 40 local to the vessel 10, for example on a digital memory 40 comprised in the device 32. However, it is envisaged that the data transformation translation 34 is stored elsewhere although it preferred to be stored on a memory easily accessible to the control unit 33 of the device 32.

In step S106, the control unit 33 may establish a predefined communication link 50 with the remote operation center 36, and a vessel-specific communication link 52 to the control system 14 of the vessel 10. Setting up communication links may be performed as an earlier step but should at least be performed prior to the following steps.

In step S108, receiving, by the control unit 33, a command from the remote operation center 36.

In step S110, transforming, by the control unit 33, the command using the data transformation translation 34 to a steering and/or maneuvering command for the vessel 10.

In step S112, transmitting, by the control unit 33, the steering and/or maneuvering command to the control system 14 of the vessel 10.

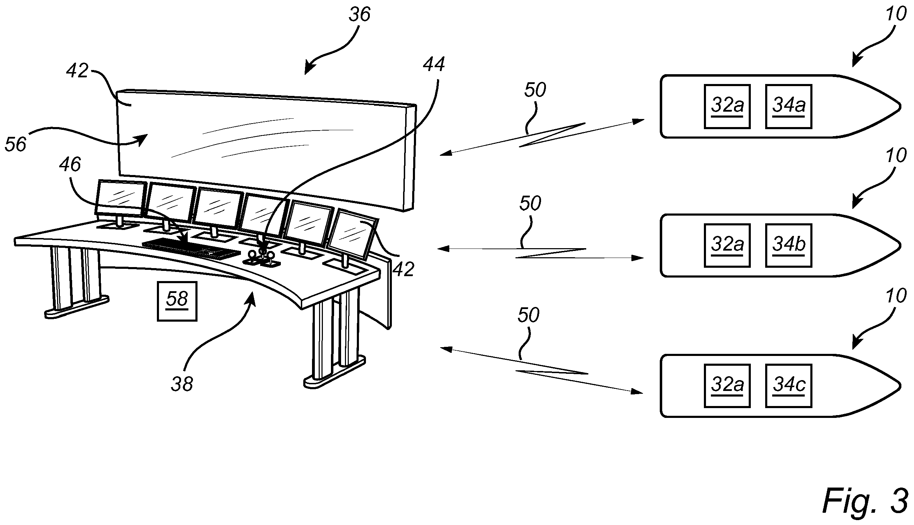

Fig. 3 schematically illustrates a remote operation center 36 configured for remote control of a vessel 10, or more than one vessel 10.

The remote operation center 36 comprising at least one display 42 and at least one input control device such as for example a multiuse lever 44, a keyboard 46, and a touch screen 56.

Furthermore, a control unit 58 of the remote operation center 36 is configured to connect the remote operation center 36 to a device 32a, 32b, 32c, of the vessels 10. The devices 32a, 32b, 32c having access to a respective data transformation translation 34a, 34b, 34c between a vessel operation configuration and control input commands of the remote operation center 36, as discussed above. The devices may be as described above, but may also be a control system of the vessel.

The control unit 58 configures the at least one display 42 and the at least one input control device 44, 46, 56 according to the vessel type. In other words, if the remote operation center 36 connects to another vessel, the control input devices 44, 46, 56 are configured according to the another vessel. The reconfiguration may be performed according to a manual selection of the vessel type, for example via a scroll down list on one of the displays 42, or the vessel type of configuration may be read from a data file received from the vessel 10, or by matching a vessel ID to a stored vessel configuration.

The interfaces provided by the displays 42 and the input control devices 44, 46, 56 of the remote operation center 36 are abstracted to provide hardware-independent representation of data generated at the interfaces. This representation may be generated at the respective device, or connectivity node 32a, 32b, 32c having access to the data file representation the vessel configurations.

The functionality of the remote operation center 36 is configured by a configuration software or configuration file, which defines the exact functions and user interfaces of the multiuse levers 44, touch screens 56, displays 42, etc.

The control unit 58 may be configured to receive a vessel operation command from the device 32a, 32b, 32c of one or more of the vessels 10. As discussed above the vessel operation command is transformed in the device 32a, 32b, 32c using the respective data transformation translation 34a, 34b, 34c.

The control unit 58 may transmitting a command produced by the at least one input control device 44, 46, 56 to the respective device 32a, 32b, 32c of the vessels 10. The command being transformable by the relevant device 32a, 32b, 32c using the data transformation translation 34a, 34b, 34c, to a steering and/or maneuvering command for the vessel 10.

The remote operation center is configured to connect to and control more than one vessel 10.

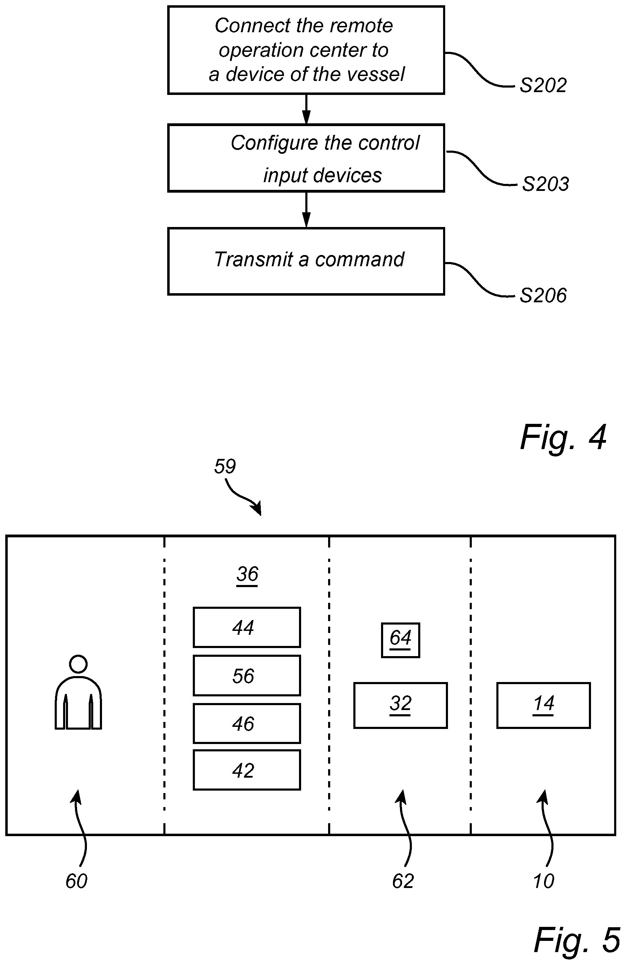

Fig. 4 is a flow-chart of method steps according to embodiments of the present invention. The method is for remote control of a vessel 10 from a remote operation center 36 comprising control input devices 44, 46, 56 and a control unit 58.

In step S202, connecting, by the control unit 58, the remote operation center 36 to a device 32a of the vessel 10. The device 32a having access to a data transformation translation 34a between a vessel operation configuration and control input commands of the remote operation center.

In step S203, configuring, by the control unit 58, the control input devices 44, 46, 56 of the remote operation center according to the vessel operation configuration of the vessel. Configuration may be performed according to a manual selection of the vessel type for which a predefined configuration is available, for example via a scroll down list on one of the displays 42, or the vessel type of configuration may be read from a data file received from the vessel 10, or by matching a vessel ID to a stored vessel configuration.

In step S206, transmitting, by the control unit 58, a command from the remote operation center 36 to the device 32a of the vessel 10, the command being transformable by the device 32a using the data transformation translation 34a, to a steering and/or maneuvering command for the vessel 10.

The configuring step S203 advantageous allows for reconfiguring the remote operation center. In such case, the method includes connecting the remote operation center to a second vessel, and reconfiguring the control input devices of the remote operation center according to the vessel operation configuration of the second vessel. Thus, the remote operation center is reconfigurable so that vessels of different types can be controlled using the same control input devices. The remote operation center may have access to different stored, e.g., on the memory 72, configurations of the control input devices associated with specific vessels. The operator may then select from a scroll down menu which vessel is being controlled. Alternatively, the control unit 58 selects the configuration of the control input devices based on a received vessel ID that can be associated to its configuration of the control input devices in the stored configurations.

Fig. 5 is a schematic view of a system 59 of a remote operation center 36 connected to a connectivity node 32 of a vessel 10 comprising a control system 14. The connectivity node 32, or device 32, is preferably arranged on the vessel 10.

As discussed above at the remote operation center 36 a user 60 may use provide input using for example a multiuse lever 44, a keyboard 46, and a touch screen 56 or monitor vessel status on at least one display 42.

A multiuse lever 44 is configured to provide more than one function using a single stick. One such multiuse lever is described in EP3716015A1. Advantageously, with a multiuse lever its function can be changed programmatically so it allows reconfiguration by software based on the needs of the configuration of the specific vessel.

The interfaces of the system 59 are abstracted to provide hardware-independent representation of the data transferred between the remote operation center 36 and the control system 14 of the vessel 10 by the interface and connectivity layer provided by the connectivity node 32. The functionality of the system 59 is configured by a configuration software or configuration file, which defines the exact functions and user interfaces of the multiuse levers 44, touch screens 56, keyboards 46, displays 42, etc. The interface abstraction layer 62 provided by the connectivity node 32 is configured by a configuration file or configuration tool.

The interface and connectivity layer 62 includes communication technology 64 for communication with an onshore operation center 36. Such communication technology 64 includes but is not limited to satellite communication, public mobile communication, private radio communication, etc. The connectivity node 32 works with the abstracted data, which means that configuring the data communication to the onshore control center 36 may not require any low-level engineering. In fact, the onshore control center 36 may be considered another operator station, similar to any other operator station onboard the vessel.

The interface and connectivity layer 62 is generally configured to engineer the vessel specific data to correspond to the vessel data model from as expected by the remote control center. For example, XML-files defining which vessel-specific signals are mapped to where in the standard data model at the remote control center. Standard cross-mapping between a standard data model and then non-standard data producers underneath is also feasible, such as produced by a lookup table.

It may occur that that onboard systems have different protocols: one system has serial communication (e.g. RS422), one system has OPC UA, one system has analog mA-based current messages. The connectivity node is either configured to support all of these types of interfaces. Alternatively, the connectivity node is fitted with an adapter. Alternatively, the connectivity node may be engineered at least partially for every unique vessel configuration and then cannot necessarily be fully configured by a single file.

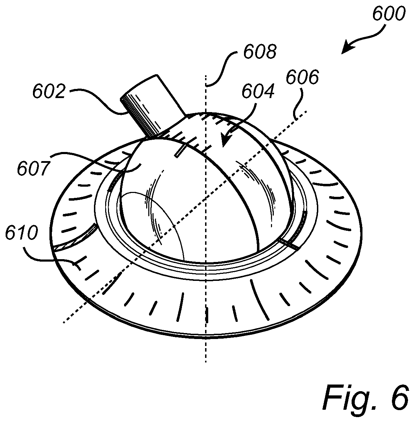

Fig. 6 illustrates an input device in the form of a multifunctional lever 600 of a remote operating center according to embodiments of the invention. The multifunctional lever 600 comprises a joystick handle 602 and is operational in multiple degrees of freedom, where each degree of freedom is programmable to control different steering and/or maneuvering aspects of a vessel. For example, the joystick handle 602 may be moved along a path 604 to vary at least a first operation parameter of a vessel. The motion may be a rotation about a first rotation axis 606. The joystick handle 602 is attached to a dome 607 which is rotatable about a second axis 608 to vary at least a second operation parameter of the vessel. The first rotation axis 606 may be substantially perpendicular to the second rotation axis 608. In addition, a wheel 610 that circumvents the dome 607. The wheel 610 may be rotated about the second axis 608 to vary at least a third operation parameter of the vessel.

The multifunctional lever 600 may be configured to control one main propulsion line of the vessel and another multifunctional lever 600 may be configured to control another main propulsion line of the vessel. Alternatively, there may be one common bow thruster multifunction lever, one common stern thruster multifunction lever, and/or one common retractable azimuthing thruster lever.

In examples, for example in shaft line follow-up control, the joystick 602 may provide RPM (revolutions per minute) control of the prolusion engines, and the wheel 610 provides rudder control. Advantageously, the movement range of the joystick in one degree of freedom may be limited, or set, programmatically, to match for example the range of a standard rudder being for example -35...35 degrees, or a tunnel thruster which would only be one-dimensional, so the movement of the joystick 602 would be allowable in one dimension only.

In examples, for example in azimuth follow-up control, the joystick 602 may provide RPM (revolutions per minute) control of the prolusion engines, and the dome 607 provides azimuth steering control.

In examples, for example in autopilot mode, the joystick 602 may provide RPM (revolutions per minute) control of the prolusion engines for all main propulsion lines, and the wheel 610 provides heading control.

In examples, for example in track and speed pilot control, the joystick 602 may provide vessel speed fine tuning and accepting changes, and the wheel 610 provides radius control.

In some examples, a joystick control mode may be set in which the entire vessel can be controlled with one joystick. In such case, a control system is onboard which is controlling and coordinating the thrusters according to the joystick command.

As a more specific example, a remote operation center may include four multiuse levers 600 as physical control devices. The vessel in this specific case may be equipped with three Azipod^{®} and one or more bow thrusters. For this configuration there are control signals for each Azipod^{®} including: azimuth angle command and RPM command. There are state signals from each Azipod^{®} including: actual azimuth angle and actual rpm. There are control signals for each tunnel thruster including commanded pitch (or rpm, or thrust percentage). There are actual state signals for each tunnel thruster including actual pitch (or rpm or thrust percentage).

Three of the multiuse levers may configure according to Azipod^{®} configuration. One degree of freedom of the multiuse levers may then control the rpm and one degree of freedom the angle of the Azipod^{®}. The angle would be allowed to have full 360 deg, because Azipod^{®} can rotate 360 deg. The third degree of freedom may be locked or could be used in tandem operations, etc.

The enabled degrees of freedom would be mapped to the angle state signal and rpm state signal which the data translation would map to the actual signals onboard the vessel.

One multiuse lever would set to "tunnel thruster mode" which would basically mean that it goes "sideways" and other degrees of freedom would be locked.

With the herein described embodiments, the operator environment provided by the remote operating center can be moved from a high rise building of a cargo vessel to e.g., lower decks to enable increased space for the cargo and therefore increased capacity. In an onshore configuration, the visual displays (any configuration, including curved video wall, etc. ) are configured to provide the required situational awareness for the operation.

Furthermore, now again with reference to fig. 1, a computer program product 35 that may be stored either in the local non-transitory memory 40 or on the remote server 28 is provided. The computer program product 20 comprises: code for generating a data transformation translation between a vessel operation configuration including a description of steering and/or maneuvering commands for the vessel and control input commands of a remote operation center comprising control input devices, code for reading a command from the remote operation center, code for transforming the command using the data transformation translation to a steering and/or maneuvering command for the vessel, and code for transmitting the steering and/or maneuvering command to a control system of the vessel.

Still further, a computer program product 70 may be stored in local non-transitory memory 72 of the operation center 36, or on the remote server 28. the computer program product comprising: code for connecting the remote operation center to a device of the vessel, the device having access to a data transformation translation between a vessel operation configuration and control input commands of the remote operation center, code for configuring the control input devices of the remote operation center according to the vessel operation configuration of the vessel, code for transmitting a command from the remote operation center to the device of the vessel, the command being transformable by the device using the data transformation translation, to a steering and/or maneuvering command for the vessel.

A control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

In one or more examples, the functions described may be implemented in hardware, software, firmware, or any combination thereof. If implemented in software, the functions may be stored on or transmitted over as one or more instructions or code on a computer-readable medium and executed by a hardware-based processing unit. Computer-readable media may include computer-readable storage media, which correspond to tangible media such as data storage media, or communication media including any media that facilitate the transfer of a computer program from one place to another, e.g., according to a communication protocol. In this manner, computer-readable media generally may correspond to (1) tangible computer-readable storage media which are non-transitory or (2) a communication media such as signal or carrier waves. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer.

Even though the invention has been described with reference to specific exemplifying embodiments thereof, many different alterations, modifications and the like will become apparent for those skilled in the art.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A computer implemented method for remote control of a vessel from a remote operation center comprising control input devices, the method comprising:
connecting (S202) the remote operation center to a device of the vessel, the device having access to a data transformation translation between a vessel operation configuration and control input commands of the remote operation center,
configuring (S203) the control input devices of the remote operation center according to the vessel operation configuration of the vessel,
transmitting (S206) a command from the remote operation center to the device of the vessel, the command being transformable by the device using the data transformation translation, to a steering command for the vessel.

2. The method of claim 1, wherein the data transformation translation is specific to the vessel (10).

3. The method of any one of claims 1 and 2, the vessel being a first vessel, the method comprising:
connecting the remote operation center to a second vessel, and
reconfiguring the control input devices of the remote operation center according to the vessel operation configuration of the second vessel.

4. The method of any one of the preceding claims, wherein the remote operation center is external to the vessel, onshore, onboard the controlled vessel, or onboard another vessel.

5. A remote operation center (36) configured for remote control of a vessel (10), the remote operation center comprising:
at least one display (42) and at least one input control device (44, 46, 56),
a control unit (58) configured to:
connect the remote operation center (36) to a device (32) of the vessel (10), the device having access to a data transformation translation between a vessel operation configuration and control input commands of the remote operation center,
configure the at least one display and the at least one input control device according to the vessel type;
receive a vessel operation command from the device of the vessel,
transmit a command produced by the at least one input control device of the remote operation center to the device of the vessel, the command being transformable by the device using the data transformation translation, to a steering and/or maneuvering command for the vessel.

6. The remote operation center of claim 5, configured to connect to and control more than one vessel.

7. The remote operation center of any one of claims 5 and 6, comprising a multiuse lever (600) comprising multiple degrees of freedom, where each degree of freedom is programmable to control different steering and/or maneuvering aspects of a vessel.

8. A computer-implemented method for remote control of a vessel (10), the method comprising:
generating (S104) a data transformation translation (34) between a vessel operation configuration including a description of steering and/or maneuvering commands for the vessel and control input commands of a remote operation center (36) comprising control input devices (42, 44, 46, 56),
receiving (S108) a command from the remote operation center,
transforming (S110) the command using the data transformation translation to a steering and/or maneuvering command for the vessel, and
transmitting (S112) the steering and/or maneuvering command to a control system of the vessel.

9. The method of claim 8, comprising:
establishing (S106) a predefined communication link (50) with the remote operation center, and a vessel-specific communication link (52) to the control system of the vessel.

10. The method of any one of claims 8 and 9, comprising:
storing (S105) the data transformation translation on a digital memory local to the vessel.

11. A device (32) installable in a vessel for remote control of the vessel, the device is configured to:
generate a data transformation translation (34) between a vessel operation configuration including a description of steering and/or maneuvering commands for the vessel and control input commands of a remote operation center comprising control input devices,
receive a command from the remote operation center (36),
transform the command using the data transformation translation to a steering and/or maneuvering command for the vessel, and
transmit the steering and/or maneuvering command to a control system of the vessel.

12. The device of claim 10, configured as a communication link between the remote operation center and the control system of the vessel, the device being tailored for the specific vessel by the data transformation translation.

13. The device of any one of claims 11 and 12, configured as an add-on to a vessel with an existing control system (14).

14. A vessel (10) comprising the device of any one of claims 11 to 13.

15. A computer program product comprising program code for remote control of a vessel from a remote operation center comprising control input devices, the computer program product comprising:
code for connecting the remote operation center to a device of the vessel, the device having access to a data transformation translation between a vessel operation configuration and control input commands of the remote operation center,
code for configuring the control input devices of the remote operation center according to the vessel operation configuration of the vessel,
code for transmitting a command from the remote operation center to the device of the vessel, the command being transformable by the device using the data transformation translation, to a steering and/or maneuvering command for the vessel.
